# EUROPÄISCHE PATENTSCHRIFT

(11) **EP 0 451 164 B1**
(45) Veröffentlichungstag und Bekanntmachung des Hinweises auf die Patenterteilung: **20.04.1994**
(21) Anmeldenummer: 90900075.4
(22) Anmeldetag: 21.12.1989
(51) Int. Cl.: B23K 26/04

(54) **VERFAHREN UND VORRICHTUNG ZUM BEARBEITEN VON WERKSTÜCKEN MIT LASERSTRAHLUNG**
PROCESS AND DEVICE FOR MACHINING WORKPIECES USING A LASER BEAM
PROCEDE ET DISPOSITIF D'USINAGE DE PIECES AVEC DES RAYONS LASER

(30) Priorität: 30.12.1988 DE 3844296; 15.08.1989 DE 3926859
(43) Veröffentlichungstag der Anmeldung: 16.10.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEYER, Eckhard, Dr.-Ing., D-5100 Aachen (DE); PETRING, Dirk, Dipl.-Phys., D-5100 Aachen (DE); ABELS, Peter, Dipl.-Ing., D-5119 Alsdorf (DE); HERZIGER, Gerd, Prof.Dr.-Ing., D-5106 Roetgen-Rott (DE)
(74) Vertreter: Eichler, Peter, Dipl.-Ing.
(86) Internationale Anmeldenummer: DE8900781
(87) Internationale Veröffentlichungsnummer: WO9007398

(56) Entgegenhaltungen:
- EP-A- 0 217 077
- DE-U- 8 710 866
- US-A- 4 752 669
- US-A- 4 774 393

## Beschreibung

Die Erfindung bezieht sich auf ein Verfahren zum Bearbeiten von Werkstücken mit Laserstrahlung, insbesondere zum Schneiden, Einlochen und Abtragen metallischer Werkstücke, bei dem die Bearbeitungsstelle des Werkstücks mit einem Strahlungsdetektor überwacht wird, unter dessen Mitwirkung die Intensität der Laserstrahlung bei Erreichen eines oberen Grenzwertes reduziert und bei Erreichen eines unteren Grenzwertes gesteigert wird.

Ein Verfahren der vorgenannten Art ist aus DE-A-34 24 825 bekannt, bei dem mit laserinduziertem Plasma gearbeitet wird. Der diesbezügliche obere Grenzwert ist diejenige Laserintensität, bei der eine laserinduzierte Detonationswelle erzeugt wird. Der untere Grenzwert ist diejenige Laserintensität, die zur Erzeugung eines Oberflächenplasmas mindestens benötigt wird. Der bekannte Strahlungsdetektor überwacht das Plasmaleuchten bzw. andere aus dem Plasma herrührende physikalische Größen, damit unter Heranziehung des Meßergebnisses die Laserintensität durch geeignete Modulation im Sinne der Aufrechterhaltung der Plasmabildung unter Vermeidung einer unerwünschten Detonationswelle geregelt werden kann.

Aus DE-U-87 10 866 ist ein Verfahren zum Bearbeiten von Werkstücken mit Laserstrahlung bekannt, bei dem von der Bearbeitungsstelle ausgehende Wärmestrahlung mit einem Strahlungsdetektor gemessen wird. Letzterer liefert ein der Stärke der Wärmestrahlung proportionales elektrisches Ausgangssignal, das einem Regelkreis zugeführt wird, der die Laserleistung auf einem eingegebenen Sollwert hält.

Demgegenüber liegt der Erfindung die Aufgabe zugrunde, ein Verfahren der eingangs genannten Art so zu verbessern, daß es bei Regelungen bzw. Einstellungen der Laserstrahlintensität zwischen Grenzwerten auch zu verwenden ist, wenn plasmafrei gearbeitet wird, insbesondere beim Einlochen, Schneiden und Abtragen.

Diese Aufgabe wird dadurch gelöst, daß mit dem Strahlungsdetektor die im Bereich der Bearbeitungsstelle herrschende Werkstücktemperatur durch Erfassung der Wärmestrahlung gemessen wird, daß der obere Grenzwert eines vorbestimmbaren Temperaturbereichs einem Temperaturwert zwischen der Verdampfungstemperatur und der Schmelztemperatur des Metalls oder einem Temperaturwert entsprechend der Zersetzungstemperatur bei Kunststoff entspricht, daß der untere Grenzwert dieses vorbestimmbaren Temperaturbereichs einem Temperaturwert etwa gleich der Schmelztemperatur des Metalls, der Erweichungstemperatur des Kunststoffs oder der Zündtemperatur des Werkstoffs beim Bearbeiten mit einem reaktiven Schneidgas entspricht, und daß die Laserstrahlung bei Erreichen des oberen Grenzwerts abgeschaltet und bei Erreichen des unteren Grenzwerts wieder eingeschaltet wird.

Für die Erfindung ist zunächst von Bedeutung, daß von der Bearbeitungsstelle ausgehende Wärmestrahlung als Meßgröße zum geregelten Verfahren benutzt wird. Die Wärmestrahlung ist temperaturabhängig, d.h. bei bestimmten Temperaturen wird Wärme bzw. Licht ganz bestimmter Wellenlänge erzeugt. Tritt Wärmestrahlung dieser Wellenlänge mit bestimmter Intensität auf, so kann davon ausgegangen werden, daß die Bearbeitungsstelle eine ganz bestimmte durch die Wellenlänge und ihre Intensität charakterisierte Temperatur hat. Bei dieser Temperatur liegt für eine bestimmte Werkstückgeometrie ein bestimmtes Bearbeitungsergebnis vor, beispielsweise eine bestimmte, noch annehmbare Schnittqualität. Diese, den oberen Grenzwert bestimmende obere Temperatur wird jeweils empirisch bestimmt, je nach Vorgaben, wie die bereits angesprochene Werkstückgeometrie, die Schnittqualität, die Schnittgeschwindigkeit, der Werkstoff od.dgl. Auch der untere Grenzwert eines vorbestimmten Temperaturbereichs kann als untere Temperatur dementsprechend durch eine Wärmestrahlung ganz bestimmter Wellenlänge und Intensität defi-niert werden.

Des weiteren ist für das erfindungsgemäße Verfahren von Bedeutung, insbesondere für dessen einfache Durchführung, daß die Reduzierung bzw. die Steigerung der Intensität der Laserstrahlung durch einfaches Ein- und Abschalten erreicht werden kann, also mit Maßnahmen, die praktisch keinen schaltungsmäßigen Aufwand erfordern. Vorteilhafterweise wird das Werkstück mit kontinuierlicher Laserstrahlung bearbeitet. Ein derartiger Laserbetrieb ist für das einfache Ab- und Einschalten der Laserstrahlung bei Erreichung der Grenzwerte besonders vorteilhaft.

Der vorangesprochene Temperaturbereich wird derart vorbestimmt, daß der obere Grenzwert bei metallischen Werkstücken zwischen der Verdampfungstemperatur und der Schmelztemperatur liegt und bei Werkstücken aus Kunststoff dessen Zersetzungstemperatur entspricht, und daß der untere Grenzwert beim Schmelzbearbeiten etwa gleich der Schmelztemperatur eines Metalls oder gleich der Erweichungstemperatur des Kunststoffs ist und beim Bearbeiten mit reaktivem Schneidgas im Bereich der Zündtemperatur liegt.

In Ausgestaltung der Erfindung wird das Verfahren so durchgeführt, daß der Vorschub des Laserstrahls beim Schneiden mit einem eine vorbestimmte Rauhtiefe der Schnittflanken des Werkstücks gewährleistenden Überlappungsgrad seiner beim Ab- und Einschalten aufeinanderfolgenden Schneidflecken erfolgt. Der Vorschub wird dazu über die sich einstellende Pulsfrequenz bzw. das Tastverhältnis gesteuert.

Damit ein Einlochvorgang möglichst bald abgebrochen werden kann, wird das Verfahren so durchgeführt, daß die Bearbeitung beim Einlochen beendet wird, wenn der obere Grenzwert nach einer vorbestimmten Zeit nicht erreicht ist. Grundlage hierfür ist die Erkenntnis, daß das Erreichen einer bestimmten, das Einlochen bewirkenden Temperatur bei einer bestimmtem Werkstückgeometrie innerhalb einer vorgegebenen Zeit zu erwarten ist, deren Überschreitung anzeigt, daß der Laserstrahl das Werkstück nunmehr durchbohrt hat und daher ein weiteres Aufschmelzen nicht mehr stattfinden kann.

In Ausgestaltung der Erfindung wird das Verfahren so durchgeführt, daß das Werkstück mit reaktivem und/oder mit inertem Schneidgas eingelocht und/oder geschnitten wird, und daß nach einem mit reaktivem Schneidgas erfolgenden Einlochen bedarfsweise auf mit Inertgas erfolgendes Schneiden umgeschaltet wird oder umgekehrt.

Reaktives Schneidgas, z.B. O₂, ermöglicht Oxydationsvorgänge im Bereich der Bearbeitungsstelle und damit schnelleres Aufschmelzen bzw. Brennen des Werkstückmaterials. Inertgas steigert die Schnittqualität durch Vermeidung von Oxidbildung, kann die Rauhtiefe vermindern und das Schneiden kritischer Werkstoffe erleichtern, auch in Verbindung mit einem reaktiven Schneidgas. Als reaktives Schneidgas wird beispielsweise Sauerstoff O₂ verwendet, als Inertgas beispielsweise Stickstoff N₂. Die Bearbeitung mit reaktivem Schneidgas und mit Inertgas kann derart kombiniert werden, daß das Einlochen durch die Verwendung von reaktivem Schneidgas schnell erfolgt bzw. überhaupt erst ermöglicht wird, wonach eine vorteilhafterweise automatisch erfolgende Umschaltung auf ein Schneiden mit Inertgas durchgeführt wird, um die gewünschte Schnittqualität zu erreichen.

Vorteilhaft ist es, daß die Überwachung der bei der Bearbeitung vom Werkstück abgegebenen Wärmestrahlung vertikal zum Werkstück und gleichachsig mit der Laserstrahlung erfolgt. Dadurch ergibt sich eine stets ordnungsgemäße Positionierung der Meßstelle im Bereich der Bearbeitungsstelle. Vor allem ist jedoch der Vorteil gegeben, daß Platzprobleme vermieden werden, weil die Meßvorrichtung bei Konturschnitten nicht mitbewegt werden muß oder ein mit der Meßvorrichtung verbundener Meßfühler nicht in der Nähe der Bearbeitungsstelle des Werkstücks angeordnet werden muß. Vielmehr kann die Wärmestrahlung von dem ohnehin vorhandenen Strahlführungssystem ohne weiteres an eine zur Auskopplung der Wärmestrahlung aus dem Laserstrahl geeignete Stelle geleitet werden.

Das Abtragen von Werkstoff mit einem Laser muß so gestaltet werden, daß eine höchstzulässige Abtragstiefe nicht überschritten wird. In Weiterbildung der Erfindung wird daher so vorgegangen, daß beim Abtragen von Werkstoff eines Werkstücks außer der von der Bearbeitungsstelle ausgehenden Wärmestrahlung auch die Abtragstiefe gemessen und für eine Grenzwertkorrektur herangezogen wird.

In der Regel kann der Sollabtrag nicht durch einen einzigen Arbeitsgang mit der erforderlichen Genauigkeit erreicht werden. Um größere Genauigkeiten auch im Falle größerer Abtragstiefen zuverlässig zu erreichen, wird daher so verfahren, daß das Abtragen von Werkstoff in zeitlich aufeinanderfolgenden Arbeitsschritten mit jeweils vorbestimmten Strahlungsintensitäten erfolgt, daß während oder nach jedem Arbeitsschritt die Abtragstiefe gemessen wird, und daß zumindest der obere Grenzwert verringert wird, wenn die der Messung nachfolgende, mit vorbestimmter Strahlungsintensität erfolgende Abtragsbearbeitung zu einer voraussichtlichen Überschreitung der Sollabtragstiefe führen würde.

Vorteilhaft ist es desweiteren, wenn eine Grenzwertkorrektur im gleichen Sinn zu einer Änderung der relativen Vorschubgeschwindigkeit der Bearbeitung erfolgt. Es kann dann beispielsweise erreicht werden, daß im Bereich von Bewegungsänderungen, also beispielsweise im Fall einer relativen Bewegungsumkehr des Laserstrahls ein zu großes Abtragen von Werkstoff vermieden wird, insbesondere um eine Überschreitung des Regelbereichs der Abtragsregelung zu vermeiden oder diese zu ergänzen.

Aus der DE-U-87 10 866 ist eine Vorrichtung zum Bearbeiten von Werkstücken mit Laserstrahlung bekannt, die mit einem Spiegel auf eine Bearbeitungsstelle gerichtet ist, deren Wärmestrahlung durch einen Bandpaßfilter einem Strahlungsdetektor zugeführt ist. Diese Vorrichtung zum Bearbeiten von Werkstücken bzw. zur Überwachung der Bearbeitung ist dadurch gekennzeichnet, daß der Laserstrahl mit einem Lochspiegel auf die Bearbeitungsstelle gerichtet ist, hinter dessen in Richtung des zur Bearbeitungsstelle gelenkten Strahlabschnitts ausgerichtetem Loch eine Fotodiode als Strahlungsdetektor angeordnet ist. Zum Auskoppeln der Wärmestrahlung aus dem Laserstrahl ist der Lochspiegel mit seinem Loch nämlich so angeordnet, daß er mittig zur Intensitätsverteilung des Laserstrahls liegt und damit die größtmögliche Wärmestrahlungsintensität für ein möglichst großes Meßsignal erbringt.

Der Laserstrahl weist einen Donat-Mode auf und das Loch des Lochspiegels ist im Bereich der geringen Strahlungsintensität des Strahlquerschnitts angeordnet. Die in der Mitte zumindest verringerte Intensitätsverteilung des Donat-Mode gestattet es, die von der Bearbeitungsstelle herrührende Wärmestrahlung weitgehend unbeeinträchtigt messen zu können.

Eine Vorrichtung zur Durchführung des Verfahrens zur Bearbeitung von Werkstücken mit Laserstrahlung bzw. zur Überwachung der Bearbeitung ist dadurch gekennzeichnet, daß die Laserstrahlung durch das Loch eines Scraperspiegels auf die Bearbeitungsstelle eingestrahlt ist, und daß die von dieser ausgehende Wärmestrahlung von dem Scraperspiegel durch den Bandpaßfilter und eine Sammellinse auf den als Fotodiode ausgebildeten Strahlungsdetektor gerichtet ist. Der Scraperspiegel sammelt großflächig die außerhalb des Laserstrahlquerschnitts auftretende reflektierte Wärmestrahlung und lenkt diese zum Strahlungsdetektor hin um.

Der Bandpaßfilter erlaubt es in allen vorbeschriebenen Anwendungsfällen, von der Bearbeitungsstelle ausgehende Wärmestrahlung unerwünschter Wellenlänge abzufangen und auch etwa auftretende Streustrahlungen und/oder Reflexionen von Laserstrahlung aus dem Bearbeitungsbereich nicht zur Einwirkung und damit zur Verfälschung des Meßergebnisses durch den Strahlungsdetektor kommen zu lassen.

Eine weitere Vorrichtung, mit der die vorbeschriebenen Überwachungsvorrichtungen vorzugsweise verwendet werden kann, ist dadurch gekennzeichnet, daß sie zum Einlochen und/oder Schneiden des Werkstücks eine den Laser ein- und ausschaltende Ablaufsteuerung hat, die mit einer die Bearbeitungsart sowie den Beginn und das Ende der Bearbeitung bestimmenden CNC-Steuereinheit funktionsmäßig verbunden und von einem Trigger beaufschlagt ist, an den der Detektor sowie den oberen und den unteren Grenzwert bestimmende Geber angeschlossen sind.

Die vorbeschriebene Vorrichtung ist insbesondere zum Einlochen und Schneiden des Werkstücks geeignet. Zum Abtragen von Werkstoff des Werkstücks wird sie zweckmäßigerweise modifiziert, nämlich im Hinblick auf die dann verwendete Abstandsmessung, infolge derer sie so ausgebildet ist, daß sie zum Abtragen von Werkstoff des Werkstücks eine den Laser ein- und ausschaltende Abtragsregelung hat, die mit einer die Bearbeitungsart, den Sollabtrag und bedarfsweise die relative Vorschubgeschwindigkeit sowie die den Beginn und das Ende der Bearbeitung bestimmenden CNC-Steuereinheit funktionsmäßig verbunden ist, und daß die Abtragsregelung von einer die Abtragstiefe messenden Einrichtung und von einem Trigger beaufschlagt ist, an den der Detektor sowie den oberen und unteren Grenzwert bestimmende Geber angeschlossen sind, die mit der Abtragsregelung in Abhängigkeit von der die Abtragstiefe messenden Einrichtung einstellbar sind.

Die Erfindung wird anhand eines in der Zeichnung dargestellten Ausführungsbeispiels erläutert. Es zeigt:
- Fig.1: eine diagrammatische Darstellung des Meßergebnisses eines Strahlungsdetektors und der Laseransteuerung, jeweils in der Abhängigkeit von der Zeit,
- Fig.2: ein Blockschaltbild einer Steuereinrichtung zur Durchführung des erfindungsgemäßen Verfahrens,
- Fig.3: eine Strahlführung mit Strahlungsdetektor,
- Fig.4: eine schematische Darstellung einer Überwachungseinrichtung mit einem Scraperspiegel,
- Fig.5: eine schematische Darstellung eines mehrschichtigen Abtragens von Werkstoff,
- Fig.6: die Abtragstiefe a in Abhängigkeit von der Zeit t beim Abtragen der Lagen in einem Werkstück der Fig.5,
- Fig.7: eine der Fig.1 oben ähnliche Darstellung zur Erläuterung der Grenzwertkorrektur, und
- Fig.8: eine der Fig.2 ähnliche Darstellung mit einem Blockschaltbild einer Steuereinrichtung zur Durchführung des erfindungsgemäßen Abtragens.

Gemäß Fig.3 wird ein Werkstück 10 mit einem Laserstrahl 11 geschnitten. Die Schneidstelle ist mit 12 bezeichnet, so daß der ungeschnittene Bereich des Werkstücks 10 mit Diagonalstrichen versehen ist, während die freiliegenden Schnittflanken 17 ungekennzeichnet bleiben. Diese Flächen sind im Idealfall völlig glatt. Der Laserstrahl 11 erzeugt an der Bearbeitungsstelle 12 auf der Oberfläche 10' des Werkstücks 10 einen Schneidfleck 18, der die Breite der Schnittfuge und deren Schnittfront bestimmt. Die Größe des Schneidflecks 18 wird durch eine im Strahlengang gelegene Fokussierlinse 23 bestimmt, beispielsweise eine ZnSe-Linse. Nahe der Bearbeitungsstelle 12 ist eine Schneidgasdüse 24 mit einem Durchlaß 25 für den Laserstrahl und in nicht dargestellter Weise zugeleitetes reaktives Schneid- und/oder Inertgas angeordnet.

Der Laserstrahl 11 hat einen Donat-Mode, d.h. seine Intensität ist etwa gemäß dem in Fig.3 oben dargestellten Gitterbild radial verteilt. Dementsprechend ist der Laserstrahl 11 in Fig.3 nur im Bereich seiner größten Intensitäten geschwärzt dargestellt. Aus Fig.3 ist dementsprechend ersichtlich, daß der zentrale Bereich des Laserstrahls 11 keine bzw. eine nur sehr geringe Intensität aufweist, so daß hier Platz für von der Bearbeitungsstelle 12 ausgehende Wärmestrahlung 16 ist. Diese Wärmestrahlung wird von der Bearbeitungsstelle 12 durch die Linse 23 zunächst einem Umlenkspiegel 26 und dann einem Lochspiegel 12 zugeleitet, durch dessen Loch 21 sie austritt, einen Bandpaßfilter 22 durchsetzt und auf einen Strahlungsdetektor 13 trifft, der beispielsweise als Fotodiode ausgebildet ist.

Das Loch 21 ist in der Richtung 20 des zwischen den Spiegeln 26,21 angeordneten Strahlabschnitts 11' gerichtet und vom Durchmesser her so gewählt, daß es ausgeschlossen ist, daß vom Laser kommende Strahlung direkt durch das Loch 21 in Richtung auf den Strahlungsdetektor 13 gelangen kann. Der Lochspiegel 21 kann unter Wegfall des Umlenkspiegels 26 auch so angeordnet werden, daß der Strahlabschnitt 11' direkt durch die Linse 23 auf die Bearbeitungsstelle 12 trifft, sofern auf den Lochspiegel 19 entsprechend seitlich eingestrahlt wird.

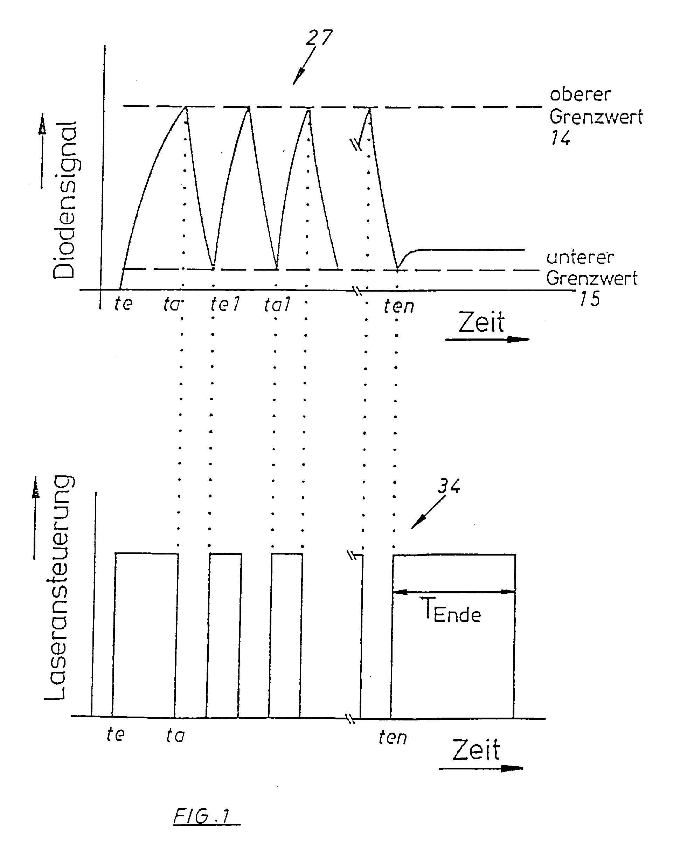

Die Einwirkung des Laserstrahls 11 auf die Bearbeitungsstelle 12 bewirkt ein Ansteigen der Temperatur des Werkstückmaterials, wenn der Laser zum Zeitpunkt te eingeschaltet wird. Unterstellt man idealisierend, daß der Laser von te bis ta mit einer vorbestimmten Intensität eingeschaltet ist, so resultiert daraus die in Fig.1 idealisierte Anstiegskurve des Strahlungsdetektor- bzw. Diodensignals. Der Anstieg erfolgt bis auf einen oberen Grenzwert 14, also bis auf einen Temperaturwert, bei dem die Bearbeitungsstelle 12 durch Emission einer durch Wellenlänge und Intensität bestimmten Wärmestrahlung erkennen läßt, daß das Werkstückmaterial eine bestimmte Temperatur erreicht hat. In diesem Augenblick ta wird der Laser abgeschaltet, so daß sich die Bearbeitungsstelle 12 abkühlt und das Diodensignal demgemäß verringert wird, bis der untere Grenzwert 15 erreicht ist. In diesem Augenblick tel wird der Laser wieder eingeschaltet usw. Es ergibt sich eine Folge von bei eingeschaltetem und bei ausgeschaltetem Laser auftretenden Meßwerten des Strahlungsdetektors 13 in Abhängigkeit von der Zeit zwischen den Grenzwerten 14,15 gemäß Fig.1. Die zugehörigen Laserimpulse bzw. Einschaltzeiten des Lasers ergeben sich aus dem unteren Teil dieser Figur. Es ist dargestellt, daß die erste Einschaltdauer ta - te zum allgemeinen Aufheizen etwas größer ist, als die nachfolgenden Einschaltdauern, z.B. ta1 - te2.

Außerdem ist in Fig.1 dargestellt, daß das Einschalten des Lasers zu einem Zeitpunkt ten keine Erhöhung des Meßwerts des Strahlungsdetektors 13 zur Folge hat. Vielmehr ist nach einer vorbestimmten Zeit TE noch stes derselbe Meßwert vorhanden bzw. gar gesunken. Die Ursache hierfür ist, daß im Bereich des Laserstrahls kein aufzuheizendes Material mehr vorhanden ist, beispielsweise weil ein Einlochvorgang im Sinne eines Durchbohrens abgeschlossen ist. Ein derartiges Meßergebnis wird dazu benutzt, das Einlochen abzubrechen oder vom Einlochbetrieb bei stillstehendem Laserstrahl auf einen kontinuierlichen oder schrittweise erfolgenden Vorschub des Laserstrahls umzuschalten.

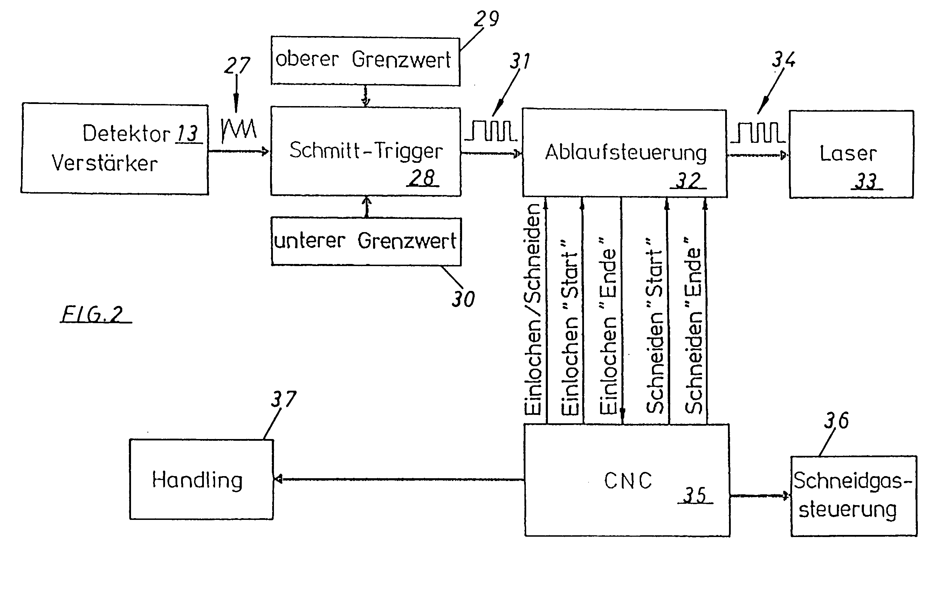

Aus Fig.2 ist die funktionsmäßige Verknüpfung der wichtigsten Bestandteile einer Vorrichtung zum Bearbeiten ersichtlich. Die von dem Detektor 13 im Verlaufe der Zeit ermittelten Meßwerte 27 werden verstärkt an einen Schmitt-Trigger 28 weitergeleitet, der außerdem mit Gebern 29 und 30 für den oberen Grenzwert 14 sowie für den unteren Grenzwert 15 verbunden ist. Der Schmitt-Trigger 28 gibt dem Meßwertverlauf 27 entsprechend unter Berücksichtigung der Grenzwerte 14,15 Schaltimpulse 31 für eine Ablaufsteuerung 32, von der aus der Laser 33 angesteuert wird, und zwar mit den aus Fig.1 ersichtlichen Ansteuerimpulsen 34.

Die Ablaufsteuerung 32 ist außerdem mit der CNC-Steuereinheit 35 funktionsmäßig verbunden. Letztere bestimmt beispielsweise die Betriebsart der Ablaufsteuerung 32, gibt also die Befehle entweder zum Einlochbetrieb oder zum Schneidbetrieb der Ablaufsteuerung 32. Insoweit ist beispielsweise unterschiedlich, daß im Einlochbetrieb eine Abschalt- und/oder Umschaltautomatik für den Fall vorhanden sein muß, daß das Loch durchgängig ist. In diesem Fall meldet die Ablaufsteuerung 32 das Ende des Einlochens an die Steuerung 35. Auch die Startbefehle für das Einlochen und das Schneiden und der Abschaltbefehl für Schneidbetrieb gehen von der Steuereinheit 35 aus. Letztere beeinflußt auch die Schneidgassteuerung 36, also die Zufuhr von z.B. Sauerstoff beim Einlochbetrieb. Außerdem dient die CNC-Steuereinheit 35 dazu, das sogenannte Handling 37 zu beeinflussen, also die erforderlichen Stellbewegungen beim Einlochen und/oder Schneiden.

Die vorbeschriebenen Verfahrensschritte und Vorrichtungen eignen sich auch zum Einlochen und Schneiden von nichtmetallischen Werkstoffen. Beispielsweise können Holz, Hartschaumstoff, Kunststoff, Glas, Keramiken und Baumwollgewebe geschnitten werden. An die Stelle der oberen und/oder unteren Grenzwerte, z.B. an die Stelle der Schmelz- oder Zündtemperatur o. dgl. treten für diese Werkstoffe maßgebliche Erfahrungswerte, wie beispielsweise die Zersetzungstemperatur und/oder die Erweichungstemperatur bei Kunststoff.

Zur Erzeugung der Laserstrahlung werden Kohlendioxid-, Kohlenmonoxid-, Festkörper-, Eximer- oder Argonlaser verwendet.

Fig.3 zeigt eine weitere Möglichkeit, die von der Bearbeitungsstelle 12 reflektierte Wärmestrahlung zu überwachen, und zwar durch Verwendung eines teiltransmittierenden Spiegels 26, der also die Laserstrahlung des Laserstrahls 11 voll reflektiert, jedoch die Wärmestrahlung 16 durchläßt, so daß diese durch einen bedarfsweise vorhandenen Bandpaßfilter 32 hindurch und/oder eine nicht dargestellte Sammellinse auf den als Fotodiode ausgebildeten Strahlungsdetektor 13 einwirken kann.

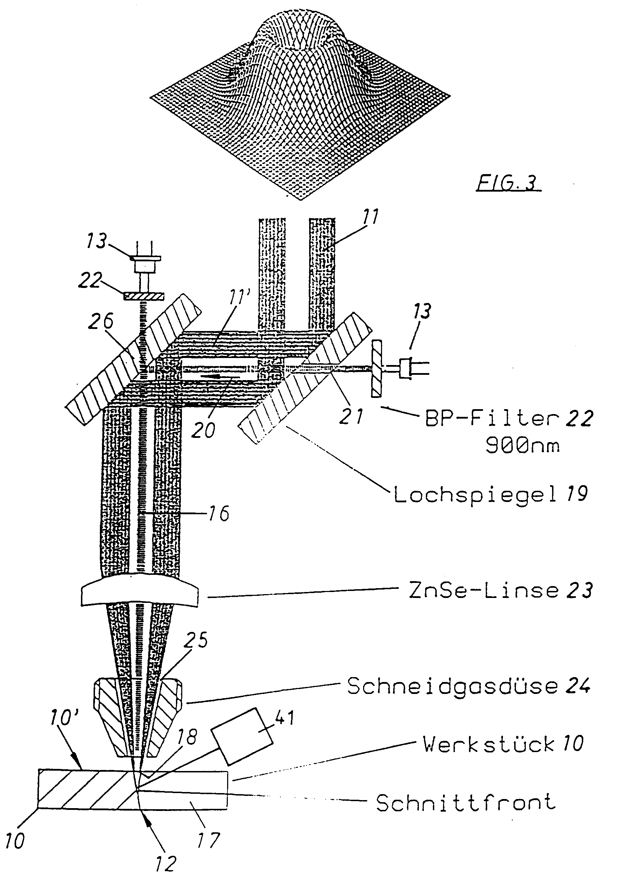

Fig.4 zeigt einen beispielsweise von einem CO₂-Laser erzeugten Laserstrahl 11, der durch das Loch 38 eines Scraperspiegels 39 in Richtung auf das Werkstück 10 gestrahlt wird. Eine Sammellinse 23 fokussiert die Laserstrahlung und erzeugt auf der Werkstückoberfläche 10' den Strahlfokus 18. Die beim Schneiden vom Werkstück 10 ausgehende Wärmestrahlung 16 trifft auf den Ring des Scraperspiegels 39 und wird von diesem im Winkel zum Laserstrahl 11 abgestrahlt. Danach wird die Wärmestrahlung 16' durch einen Bandpaßfilter 22 einer Sammellinse 40 zugeführt welche die Wärmestrahlung auf den als Fotodiode ausgebildeten Strahlungsdetektor 13 fokussiert.

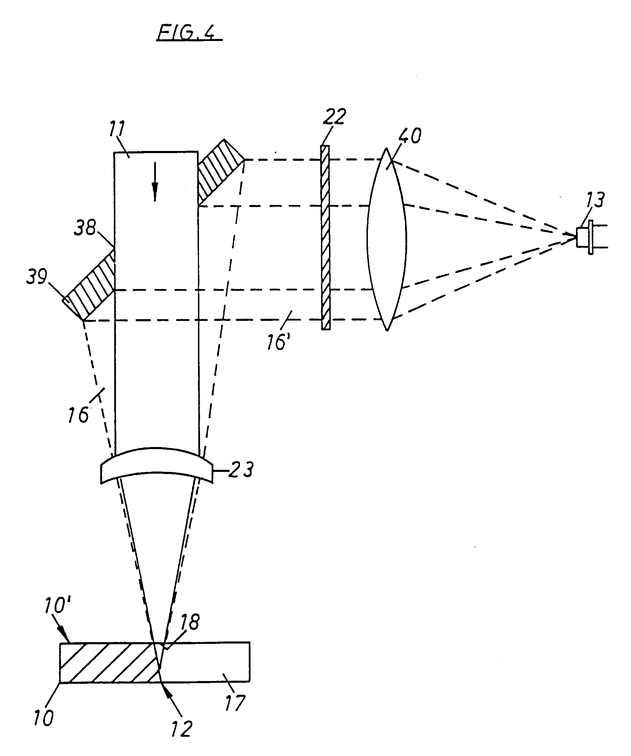

In Fig.5 ist ein Werkstück 10 dargestellt, in das eine quaderförmige Vertiefung 42 mit einer Gesamtabtragstiefe aₛₒₗₗ mittels Laserstrahlung eingearbeitet werden soll. Wenn diese Abtragstiefe vergleichsweise groß ist, kann sie nicht mit einem einzigen Arbeitsgang erreicht werden. Vielmehr muß der abzutragende Bereich des Werkstücks 10 mehrfach bearbeitet werden, so daß der Werkstoff lagenweise entfernt wird. In Fig.5 sind diese Lagen exakt gleich groß und gleich dick übereinander angeordnet. Es versteht sich jedoch, daß die Lagen infolge unterschiedlicher Ausgestaltung der Vertiefung 42 auch abweichend ausgebildet sein können, also unterschiedlich groß und unterschiedlich dick.

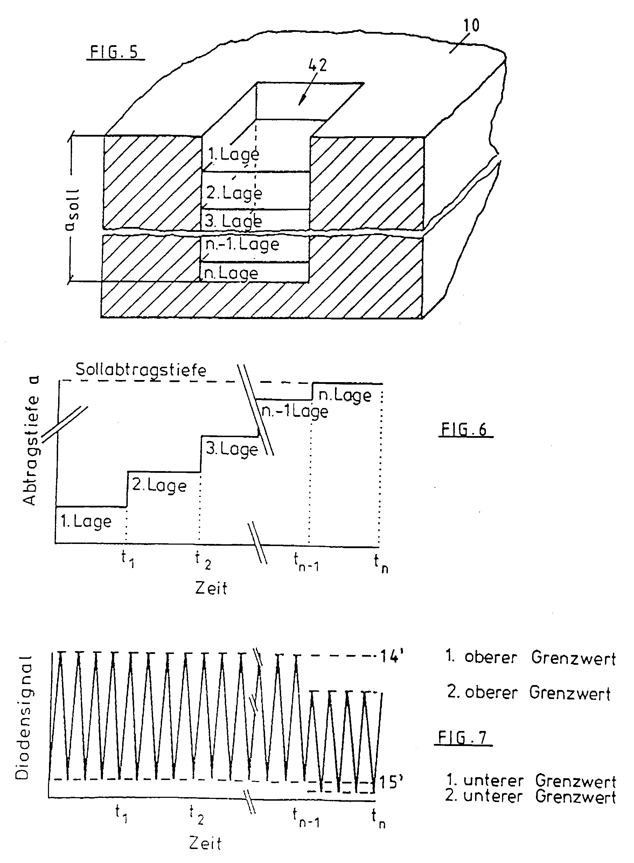

Fig.6 zeigt für den Fall der Fig.5 die Abtragstiefe a über der Zeit t und es ist ersichtlich, daß die Abtragstiefe infolge zeitlich aufeinander folgende Arbeitsschritte, deren Dauer durch t₁,t₂ usw. gekennzeichnet ist, in gleichgroßen Beträgen gesteigert wird. Das bedeutet, daß das Abtragen des Werkstoffs mit jeweils vorbestimmter Strahlungsintensität erfolgt. Es ist ersichtlich, daß nach dem Abtragen der n.-1.Lage die Anwendung einer ungeänderten Strahlungsintensität zu einer Überschreitung der Sollabtragstiefe führen würde. Die n.Lage muß daher so abgetragen werden, daß zumindest der obere Grenzwert verringert wird. Das wird anhand der Fig.7 erläutert.

In Fig.7 zeigt das Diagramm die Abhängigkeit des Diodensignals einer die Abtragstiefe messenden Einrichtung 41 von der Zeit t für die Arbeitsschritte der Fig.5,6. Es ist ersichtlich, daß bei den Arbeitsschritten t₁,t₂ bis tₙ₋₁ mit einem ersten oberen Grenzwert 14' gearbeitet wird, sowie mit einem ersten unteren Grenzwert 15'. Zwischen diesen Grenzwerten werden während eines Abtragintervalls, z.B. t₁ eine Anzahl von Laserlichtimpulsen vorbestimmter Intensität angewendet. Die infolgedessen zugeführte Strahlungsenergie bestimmt sich durch die Grenzwerte 14',15'. Zum Abtragen der n.Lage sind die Grenzwerte gesenkt. Die zugeführte Energie bestimmt sich nun durch den zweiten oberen Grenzwert und durch den zweiten unteren Grenzwert. Beide Grenzwerte sind kleiner. Die zugeführte Energie ist geringer, so daß die Sollabtragstiefe nicht überschritten wird.

Anhand der Fig.5 bis 7 wurde ein schrittweises Abtragen von Werkstoff beschrieben. Es ist jedoch auch möglich, daß die Sollabtragstiefe mit einem einzigen Arbeitsschritt erreicht werden kann, insbesondere wenn sie gering ist. In diesem Fall muß je nach Größe der Sollabtragstiefe ebenfalls eine Beeinflussung der Grenzwerte 14',15' erfolgen. Beides kann durch ein während des Abtragens erfolgendes Messen der Abtragstiefe erreicht werden. Dafür ist eine Einrichtung 41 vorhanden, die in Fig.3 schematisch dargestellt wurde. Sie mißt in einem Winkel zum auf das Werkstück 10 fallenden Laserstrahl 11. Eine solche Messung kann aber auch gleichachsig erfolgen. Die Einrichtung ist beispielsweise ein nach dem Triangulationsprinzip arbeitender optischer Abstandssensor. Die Abstandsmessung erfolgt entweder nach einem werkstoffabtragenden Arbeitsschritt, oder währenddessen. Letzteres ist erforderlich, wenn lediglich ein einziger werkstoffabtragender Arbeitsschritt erfolgt, wie oben beschrieben.

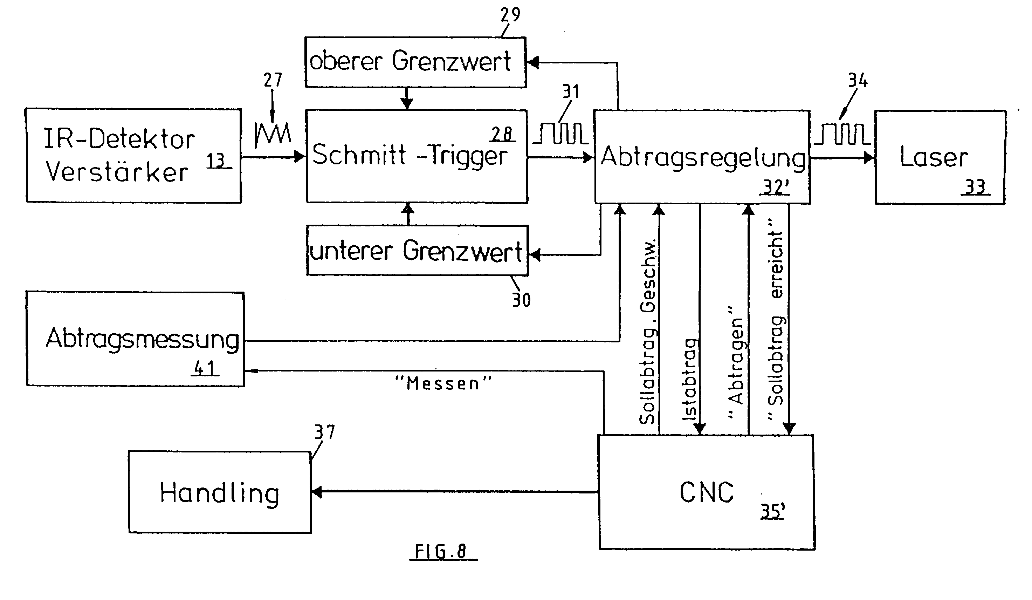

Die abstandsmessende Einrichtung 41 ist funktionsmäßig in eine in Fig.8 blockschaltmäßig dargestellte Regeleinrichtung eingebunden, die der Steuereinrichtung der Fig.2 ähnlich ist. Die Bearbeitungsstelle 12 des Werkstücks 10 wird in derselben Weise wie beim Schneid- und Einlochbetrieb von einem Detektor 13 überwacht, von dem aus ein verstärktes Signal an einen Schmitt-Trigger 28 gegeben wird, der unter Beachtung der oberen und unteren Grenzwerte 14',15' der Geber 29,30 dem Meßwertverlauf gemäß Fig.7 entsprechende Schaltimpulse 31 an eine Abtragsregelung 32' zur Regelung des Lasers 33 mittels der Regelimpulse 34 weitergibt. Zusätzlich wird die Bearbeitungsstelle 12 jedoch noch von der Abstands-Meßeinrichtung 41 beobachtet, so daß eine Abtragsmessung erfolgt, deren Ergebnis der Abtragsregelung 32' zur Verfügung gestellt wird.

Die Abtragsregelung 32' ist gemäß Fig.8 desweiteren mit einer CNC-Steuereinheit 35' funktionsmäßig verbunden, die die Betriebsart, den Sollabtrag aₛₒₗₗ, die relative Vorschubgeschwindigkeit sowie den Beginn und das Ende der Bearbeitung bestimmt, in dem sie Signale "Abtragen" an die Abtragsregelung 32' gibt und von dieser den Istabtrag gemeldet bekommt, sowie das Signal "Sollabtrag erreicht", so daß das Signal "Abtragen" gestoppt werden kann. Außerdem kann die CNC-Steuerung 35' mit Befehlen "Messen" den Betrieb der Einrichtung 41 steuern, und zwar entweder gleichzeitig mit dem Befehl "Abtragen", also sozusagen on-line oder danach, also sozusagen off-line.

## Patentansprüche

1. Verfahren zum Bearbeiten von Werkstücken (10) mit Laserstrahlung (11), insbesondere zum Schneiden, Einlochen und Abtragen metallischer Werkstücke (10), bei dem die Bearbeitungsstelle (12) des Werkstücks (10) mit einem Strahlungsdetektor (13) überwacht wird, unter dessen Mitwirkung die Intensität der Laserstrahlung bei Erreichen eines oberen Grenzwertes (14) reduziert und bei Erreichen eines unteren Grenzwertes (15) gesteigert wird, **dadurch gekennzeichnet,** daß mit dem Strahlungsdetektor (13) die im Bereich der Bearbeitungsstelle (12) herrschende Werkstücktemperatur durch Erfassung der Wärmestrahlung (16) gemessen wird, daß der obere Grenzwert (14) eines vorbestimmbaren Temperaturbereichs einem Temperaturwert zwischen der Verdampfungstemperatur und der Schmelztemperatur des Metalls oder einem Temperaturwert entsprechend der Zersetzungstemperatur bei Kunststoff entspricht, daß der untere Grenzwert (15) dieses vorbestimmbaren Temperaturbereichs einem Temperaturwert etwa gleich der Schmelztemperatur des Metalls, der Erweichungstemperatur des Kunststoffs oder der Zündtemperatur des Werkstoffs beim Bearbeiten mit einem reaktiven Schneidgas entspricht, und daß die Laserstrahlung bei Erreichen des oberen Grenzwerts (14) abgeschaltet und bei Erreichen des unteren Grenzwerts (15) wieder eingeschaltet wird.

2. Verfahren nach Anspruch 1 , **dadurch gekennzeichnet,** daß der Vorschub des Laserstrahls (11) beim Schneiden mit einem eine vorbestimmte Rauhtiefe der Schnittflanken (17) des Werkstücks (10) gewährleistenden Überlappungsgrad seiner beim Ab- und Einschalten aufeinanderfolgenden Schneidflecken (18) erfolgt.

3. Verfahren nach Anspruch 1 oder 2, **dadurch gekennzeichnet,** daß die Bearbeitung beim Einlochen beendet wird, wenn der obere Grenzwert (14) nach einer vorbestimmten Zeit (TE) nicht erreicht ist.

4. Verfahren nach einem oder mehreren der Ansprüche 1 bis 3, **dadurch gekennzeichnet,** daß das Werkstück (10) mit kontinuierlicher Laserstrahlung bearbeitet wird.

5. Verfahren nach einem oder mehreren der Ansprüche 1 bis 4, **dadurch gekennzeichnet,** daß das Werkstück (10) mit reaktivem und/oder mit inertem Schneidgas eingelocht und/oder geschnitten wird, und daß nach einem mit reaktivem Schneidgas erfolgenden Einlochen bedarfsweise auf mit Inertgas erfolgendes Schneiden umgeschaltet wird oder umgekehrt.

6. Verfahren nach einem oder mehreren der Ansprüche 1 bis 5, **dadurch gekennzeichnet,** daß die Überwachung der bei der Bearbeitung vom Werkstück (10) abgegebenen Wärmestrahlung (16) vertikal zum Werkstück (10) und gleichachsig mit der Laserstrahlung erfolgt.

7. Verfahren nach Anspruch 1, **dadurch gekennzeichnet,** daß beim Abtragen von Werkstoff eines Werkstücks (10) außer der von der Bearbeitungsstelle (12) ausgehenden Wärmestrahlung (16) auch die Abtragstiefe (a) gemessen und für eine Grenzwertkorrektur herangezogen wird.

8. Verfahren nach Anspruch 7, **dadurch gekennzeichnet,** daß das Abtragen von Werkstoff in zeitlich aufeinanderfolgenden Arbeitsschritten mit jeweils vorbestimmten Strahlungsintensitäten erfolgt, daß während oder nach jedem Arbeitsschritt die Abtragstiefe (a) gemessen wird, und daß zumindest der obere Grenzwert (14') verringert wird, wenn die der Messung nachfolgende, mit vorbestimmter Strahlungsintensität erfolgende Abtragsbearbeitung zu einer voraussichtlichen Überschreitung der Sollabtragstiefe (aₛₒₗₗ) führen würde.

9. Verfahren nach einem oder mehreren der Ansprüche 1 bis 8, **dadurch gekennzeichnet,** daß eine Grenzwertkorrektur im gleichen Sinn zu einer Änderung der relativen Vorschubgeschwindigkeit der Bearbeitung erfolgt.

10. Vorrichtung zur Durchführung eines Verfahrens nach einem der Ansprüche 1 bis 9, bei der die Laserstrahlung mit einem Spiegel auf eine Bearbeitungsstelle (12) gerichtet ist, deren Wärmestrahlung durch einen Bandpaßfilter (22) einem Strahlungsdetektor (13) zugeführt ist, **dadurch gekennzeichnet,** daß der Laserstrahl (11) mit einem Lochspiegel (19) auf die Bearbeitungsstelle (12) gerichtet ist, hinter dessen in Richtung (20) des zur Bearbeitungsstelle (12) gelenkten Strahlabschnitts (11') ausgerichtetem Loch (21) eine Fotodiode als Strahlungsdetektor (13) angeordnet ist.

11. Vorrichtung nach Anspruch 10, **dadurch gekennzeichnet,** daß der Laserstrahl (11) einen Donat-Mode aufweist und das Loch (21) des Lochspiegels (19) im Bereich der geringen Strahlungsintensität des Strahlquerschnitts angeordnet ist.

12. Vorrichtung zur Durchführung eines Verfahrens nach einem der Ansprüche 1 bis 9, bei der die Laserstrahlung mit einem Spiegel auf eine Bearbeitungsstelle (12) gerichtet ist, deren Wärmestrahlung durch einen Bandpaßfilter (22) einem Strahlungsdetektor (13) zugeführt ist, **dadurch gekennzeichnet,** daß die Laserstrahlung durch das Loch (38) eines Scraperspiegels (39) auf die Bearbeitungsstelle (12) eingestrahlt ist, und daß die von dieser ausgehende Wärmestrahlung von dem Scraperspiegel (39) durch den Bandpaßfilter (22) und eine Sammellinse (40) auf den als Fotodiode ausgebildeten Strahlungsdetektor (13) gerichtet ist.

13. Vorrichtung nach einem oder mehreren der Ansprüche 10 bis 12, **dadurch gekennzeichnet,** daß sie zum Einlochen und/oder Schneiden des Werkstücks (10) eine den Laser (33) ein- und ausschaltende Ablaufsteuerung (32) hat, die mit einer die Bearbeitungsart sowie den Beginn und das Ende der Bearbeitung bestimmenden CNC-Steuereinheit (35) funktionsmäßig verbunden und von einem Trigger (28) beaufschlagt ist, an den der Detektor (13) sowie den oberen und den unteren Grenzwert (14,15) bestimmende Geber (29,30) angeschlossen sind.

14. Vorrichtung nach einem oder mehreren der Ansprüche 10 bis 13, **dadurch gekennzeichnet,** daß sie zum Abtragen von Werkstoff des Werkstücks (10) eine den Laser (33) ein- und ausschaltende Abtragsregelung (32') hat, die mit einer die Bearbeitungsart, den Sollabtrag (aₛₒₗₗ) und bedarfsweise die relative Vorschubgeschwindigkeit sowie die den Beginn und das Ende der Bearbeitung bestimmenden CNC-Steuereinheit (35') funktionsmäßig verbunden ist, und daß die Abtragsregelung (32') von einer die Abtragstiefe (a) messenden Einrichtung (41) und von einem Trigger (28) beaufschlagt ist, an den der Detektor (13) sowie den oberen und unteren Grenzwert (14',15') bestimmende Geber (29,30) angeschlossen sind, die mit der Abtragsregelung (32') in Abhängigkeit von der die Antragstiefe (a) messenden Einrichtung (41) einstellbar sind.

## Claims

1. Process for the machining of workpieces (10) with laser radiation (11), particularly for the cutting, perforating and removal of material from metallic workpieces (10), in which the machining site (12) of the workpiece (10) is monitored by a radiation detector (13) by means of which the intensity of the laser radiation is reduced upon reaching an upper limit value (14) and is increased upon reaching a lower limit value (15), characterised in that with the radiation detector (13) the workpiece temperature prevailing in the region of the machining site (12) is measured by detecting the thermal radiation (16), that the upper limit value (14) of a predeterminable temperature range corresponds to a temperature value between the vaporisation temperature and the melting temperature in the case of a metal or to a temperature value corresponding to the disintegration temperature in the case of plastics materials, that the lower limit value (15) of this predeterminable temperature range corresponds to a temperature value approximately equal to the melting temperature of the metal, the softening temperature of the plastics material or the ignition temperature of the material in the case of machining with a reactive cutting gas, and that the laser radiation is switched off upon reaching the upper limit value (14) and is switched on again upon reaching the lower limit value (15).

2. Process according to claim 1, characterised in that the advance of the laser beam (11), in a cutting operation, is effected with a degree of overlapping of its cutting spots (18) which follow one another upon switching off and switching on, thereby to ensure a predetermined rough depth of the cut flanks (17) of the workpiece (10).

3. Process according to claim 1 or 2, characterised in that the machining, when perforating, is terminated when the upper limit value (14) is not achieved after a predetermined time (TE).

4. Process according to one or more of claims 1 to 3, characterised in that the workpiece (10) is machined with continuous laser radiation.

5. Process according to one or more of claims 1 to 4, characterised in that the workpiece (10) is perforated and/or cut using reactive and/or inert cutting gas, and that after a perforation effected with reactive cutting gas the process is switched over to or reversed to cutting effected with inert gas as required.

6. Process according to one or more of claims 1 to 5, characterised in that the monitoring of the thermal radiation (16) given off during the machining of the workpiece (10) is effected perpendicular to the workpiece (10) and coaxially with respect to the laser radiation.

7. Process according to claim 1, characterised in that in the removal of material from a workpiece (10), besides the thermal radiation (16) arising from the machining site (12), the depth (a) of removal is also measured and is utilised for a limit value correction.

8. Process according to claim 7, characterised in that the removal of material is effected in working steps which follow one another in time and each with predetermined radiation intensity, that during or after each working step the depth (a) of removal is measured, and that at least the upper limit value (14') is reduced when the removal step following the measurement and to be carried out with predetermined radiation intensity would lead to the desired depth of removal (aₛₒₗₗ) probably being exceeded.

9. Process according to one or more of claims 1 to 8, characterised in that a limit value correction is effected in the same sense to a change in the relative feed speed of the machining.

10. Apparatus for carrying out a process according to one of claims 1 to 9, in which the laser radiation is directed by a mirror to a machining site (12), the thermal radiation from which is fed through a bandpass filter (22) to a radiation detector (13), characterised in that the laser beam (11) is directed to the machining site (12) with a perforated mirror (19), behind the hole (21) in which is arranged a photodiode as radiation detector (13), with the hole being aligned in the direction (20) of the beam section (11') which is guided towards the machining site (12).

11. Apparatus according to claim 10, characterised in that the laser beam (11) has a doughnut mode and the hole (21) in the perforated mirror (19) is arranged in the region of the small radiation intensity portion of the beam cross-section.

12. Apparatus for carrying out a process according to one of claims 1 to 9, in which the laser radiation is directed by a mirror to a machining site (12), the thermal radiation from which is fed through a bandpass filter (22) to a radiation detector (13), characterised in that the laser radiation is beamed through the hole (38) in a scraper mirror (39) to the machining site (12), and that the thermal radiation arising from this is directed by the scraper mirror (39) through the bandpass filter (22) and a converging lens (40) to the radiation detector (13) formed as a photodiode.

13. Apparatus according to one or more of claims 10 to 12, characterised in that, for the perforation and/or cutting of the workpiece (10), it has start-up control means (32) for switching on and switching off the laser (33), the start-up control means being functionally connected to a CNC control unit (35) which determines the machining mode as well as the beginning and the end of the machining operation and is actuated by a trigger (28) to which are connected the detector (13) as well as transmitters (29, 30) which determine the upper and the lower limit values (14, 15).

14. Apparatus according to one or more of claims 10 to 13, characterised in that, for the removal of material from the workpiece (10), it has a removal regulator (32') which switches on and switches off the laser (33), said removal regulator being functionally connected to a CNC control unit (35') which determines the machining mode, the desired removal depth (aₛₒₗₗ) and, as required, the relative feed velocity as well as the beginning and the end of the machining, and that the removal regulator (32') is actuated by a device (41) measuring the removal depth (a) and by a trigger (28) to which are connected the detector (13) as well as transmitters (29, 30) determining the upper and the lower limit values (14', 15'), said transmitters being adjustable by the removal regulator (32') in dependence upon the device (41) measuring the removal depth (a).

## Revendications

1. Procédé pour l'usinage de pièces (10) à l'aide d'un rayonnement laser (11), notamment pour le découpage, le perçage et l'enlèvement de matière sur des pièces métalliques (10), selon lequel le point d'usinage (12) de la pièce (10) est surveillé à l'aide d'un détecteur de rayonnement (13) sous l'action duquel l'intensité du rayonnement laser est réduite lorsqu'une valeur limite supérieure (14) est atteinte, et augmentée lorsqu'une valeur limite inférieure (15) est atteinte, caractérisé en ce qu'à l'aide du détecteur de rayonnement (13), la température de la pièce à usiner régnant dans la zone du point d'usinage (12) est mesurée par détection du rayonnement thermique (16), en ce que la valeur limite supérieure (14) d'une plage de température apte à être prédéfinie correspond à une valeur de température située entre la température d'évaporation et la température de fusion du métal, ou à une valeur de température correspondant à la température de décomposition, pour une matière plastique, en ce que la valeur limite inférieure (15) de cette plage de température apte à être prédéfinie correspond à une valeur de température approximativement égale à la température de fusion du métal, à la température de ramollissement de la matière plastique ou à la température d'inflammation du matériau, lors de l'usinage avec un gaz de coupe réactif, et en ce que le rayonnement laser est arrêté quand la valeur limite supérieure (14) est atteinte, et remis en marche quand la valeur limite inférieure (15) est atteinte.

2. Procédé selon la revendication 1, caractérisé en ce que l'avance du rayon laser (11), pour le découpage, se fait avec un degré de recouvrement de ses taches locales de coupe (18) se succédant lors de l'arrêt et de la mise en marche qui garantit une profondeur de rugosité prédéfinie des flancs de coupe (17) de la pièce (10).

3. Procédé selon la revendication 1 ou 2, caractérisé en ce que l'usinage est terminé, dans le cas du perçage, lorsque la valeur limite supérieure (14) n'est pas atteinte au bout d'une durée prédéfinie (TE).

4. Procédé selon l'une au moins des revendications 1 à 3, caractérisé en ce que la pièce (10) est usinée à l'aide d'un rayonnement laser continu.

5. Procédé selon l'une au moins des revendications 1 à 4, caractérisé en ce que la pièce (10) est percée et/ou découpée à l'aide d'un gaz de coupe réactif et/ou inerte, et en ce qu'après un perçage réalisé à l'aide d'un gaz de coupe réactif, on passe éventuellement à un découpage à l'aide d'un gaz inerte, ou inversement.

6. Procédé selon l'une au moins des revendications 1 à 5, caractérisé en ce que la surveillance du rayonnement thermique (16) émis lors de l'usinage de la pièce (10) se fait verticalement par rapport à la pièce (10) et suivant le même axe que le rayonnement laser.

7. Procédé selon la revendication 1, caractérisé en ce que l'on mesure, pendant l'enlèvement de matière sur une pièce (10), non seulement le rayonnement thermique (16) émanant du point d'usinage (12), mais aussi la profondeur d'enlèvement (a), et on l'utilise pour une correction de valeurs limites.

8. Procédé selon la revendication 7, caractérisé en ce que l'enlèvement de matière se fait par passes successives dans le temps, avec des intensités de rayonnement prédéfinies, à chaque fois, en ce que la profondeur d'enlèvement (a) est mesurée pendant ou après chaque passe, et en ce que la valeur limite supérieure (14'), au moins, est réduite au cas où l'usinage par enlèvement succédant à la mesure et se faisant avec une intensité de rayonnement prédéfinie entraînerait un dépassement probable de la profondeur d'enlèvement prescrite (aₛₒₗₗ).

9. Procédé selon l'une au moins des revendications 1 à 8, caractérisé en ce qu'une correction des valeurs limites a lieu dans le même sens qu'une modification de la vitesse d'avance relative de l'usinage.

10. Dispositif pour la mise en oeuvre d'un procédé selon l'une des revendications 1 à 9, avec lequel le rayonnement laser est orienté à l'aide d'un miroir vers un point d'usinage (12) dont le rayonnement thermique est transmis à un détecteur de rayonnement (13) à travers un filtre passe-bande (22), caractérisé en ce que le rayon laser (11) est dirigé vers le point d'usinage (12) à l'aide d'un miroir perforé (19), une diode photo-électrique étant disposée comme détecteur de rayonnement (13) derrière le trou (21) dudit miroir, qui est disposé dans le sens (20) de la section de rayon (11') déviée vers le point d'usinage (12).

11. Dispositif selon la revendication 10, caractérisé en ce que le rayon laser (11) présente un mode donneur et le trou (21) du miroir perforé (19) est disposé dans la zone de l'intensité de rayonnement faible de la section transversale du rayon.

12. Dispositif pour la mise en oeuvre d'un procédé selon l'une des revendications 1 à 9, avec lequel le rayonnement laser est orienté à l'aide d'un miroir vers un point d'usinage (12) dont le rayonnement thermique est transmis à un détecteur de rayonnement (13) à travers un filtre passe-bande (22), caractérisé en ce que le rayonnement laser est amené sur le point d'usinage (12) à travers le trou (38) d'un miroir (39), et en ce que le rayonnement thermique émanant de ce point d'usinage est dirigé par ledit miroir (39), à travers le filtre passe-bande (22) et une lentille convergente (40), vers le détecteur de rayonnement (13) conçu comme une diode photo-électrique.

13. Dispositif selon l'une au moins des revendications 10 à 12, caractérisé en ce qu'il comporte, pour le perçage et/ou le découpage de la pièce (10), une commande séquentielle (32) qui met en marche et arrête le laser (33), qui est reliée suivant une relation fonctionnelle à une unité de commande CNC (35) définissant le type d'usinage et le début et la fin de l'usinage, et qui est sollicitée par un déclencheur (28) auquel sont reliés le détecteur (13) et les émetteurs (29, 30) définissant les valeurs limites supérieure et inférieure (14, 15).

14. Dispositif selon l'une au moins des revendications 10 à 13, caractérisé en ce que pour l'enlèvement de matière sur la pièce (10), il possède un asservissement d'enlèvement (32') qui met en marche et arrête le laser (33) et qui est relié suivant une relation fonctionnelle à une unité de commande CNC (35') définissant le type d'usinage, l'enlèvement prescrit (aₛₒₗₗ), éventuellement la vitesse d'avance relative et le début et la fin de l'usinage, et en ce que l'asservissement d'enlèvement (32') est sollicité par un dispositif (41) mesurant la profondeur d'enlèvement (a), et par un déclencheur (28) auquel sont reliés le détecteur (13) et les émetteurs (29, 30) définissant les valeurs limites supérieure et inférieure (14', 15'), qui sont aptes à être réglés avec l'asservissement d'enlèvement (32') en fonction du dispositif (41) mesurant la profondeur d'enlèvement (a).
